# EUROPÄISCHE PATENTANMELDUNG

(11) **EP 1 897 827 A2**
(43) Veröffentlichungstag der Anmeldung: **12.03.2008**
(21) Anmeldenummer: 07014041.3
(22) Anmeldetag: 18.07.2007
(51) Int. Cl.: B65G 53/46, B65G 65/48

(54) **Zellenradschleuse**

(30) Priorität: 11.09.2006 DE 102006043252
(71) Anmelder: Coperion Waeschle GmbH & Co. KG, 88250 Weingarten (DE)
(72) Erfinder: Zinser, Bruno, 88289 Waldburg (DE); Schöllhorn, Thomas, 88410 Hauerz (DE)
(74) Vertreter: Hofmann, Matthias

(57) **Zusammenfassung**

Eine Zellenradschleuse (1) hat ein Gehäuse (2) und ein in einer zylindrischen Zellenradgehäusebohrung (4) um eine Zylinderachse (9) drehantreibbar angeordnetes Zellenrad (10). Eine Zellenrad-Antriebswelle (12, 13) ist drehfest mit dem Zellenrad (10) verbunden. Eine äußere Mantelwand (17) der Zellenrad-Antriebswelle (12, 13) ist gegen eine diese umgebende Innenwand (18) eines Gehäuse-Seitendeckels (6, 7) durch eine vormontierte Dichtungs-Baugruppe (16) abgedichtet. Diese ist angeordnet in einer zwischen der äußeren Mantelwand (17) und der Innenwand (18) ausgebildeten Dichtungsaufnahme (19), die derart geformt ist, dass die Dichtungsbaugruppe (16) zum Innenraum der Zellenradschleuse (1) hin demontierbar ist. Es resultiert eine Zellenradschleuse, die einfach gereinigt werden kann.

## Beschreibung

Die Erfindung betrifft eine Zellenradschleuse nach dem Oberbegriff des Anspruchs 1.

Eine derartige Zellenradschleuse ist aus der DE 199 01 967 A1 bekannt. Der Dichtbereich zwischen der Zellenrad-Antriebswelle und dem Seitendeckel ist ein hinsichtlich seiner Anfälligkeit für Fördergutablagerungen bzw. Rückstände oftmals problematischer Bereich.

Es ist eine Aufgabe der vorliegenden Erfindung, eine Zellenradschleuse der eingangs genannten Art derart weiterzubilden, dass sie einfacher gereinigt werden kann.

Diese Aufgabe ist erfindungsgemäß gelöst durch eine Zellenradschleuse mit den im Kennzeichnungsteil des Anspruchs 1 angegebenen Merkmalen.

Erfindungsgemäß wurde erkannt, dass es für die Reinigungsfreundlichkeit der Zellenradschleuse im Dichtbereich zwischen der Zellenrad-Antriebswelle und dem Seitendeckel sehr förderlich ist, wenn einerseits eine vormontierte, also als Einheit montier- und demontierbare, Dichtungs-Baugruppe eingesetzt wird und andererseits diese Baugruppe zum Innenraum der Zellenradschleuse hin demontierbar ist. Die Baugruppen-Ausführung erleichtert den Ein- und Ausbau der Dichtungs-Baugruppe, da nicht mehrere Einzelteile montiert oder demontiert werden müssen. Zudem müssen nicht die Einzelteile bei der Montage zueinander ausgerichtet werden. Die Formgebung der Dichtungsaufnahme ermöglicht eine Demontage der Dichtungs-Baugruppe nach innen, so dass die Demontage auch bei kompakter Seitendeckelausführung möglich ist, ohne Lagerkomponenten der Antriebswelle ausbauen zu müssen. Nach dem Ausbau der Dichtungs-Baugruppe liegt die Dichtungsaufnahme als einfach zu reinigender Bereich der Zellenradschleuse vor, die für ein Reinigungsmedium, z. B. für Reinigungsflüssigkeit, gut zugänglich ist. Eine unerwünschte Ansammlung von Produktresten ist vermieden. Die erfindungsgemäße Zellenradschleuse eignet sich daher besonders für Cleaning in Place- (CIP) und für Cleaning out of Process- (COP) Anwendungen. Die erfindungsgemäße Ausgestaltung der Dichtungs-Baugruppe und ihrer Aufnahme kann bei verschiedenen Typen von Zellenradschleusen zur Anwendung kommen. Zu nennen sind hier insbesondere auch Durchblasschleusen, bei denen als Auslaufschacht ein Durchblas-Ein- und Austritt zum Einsatz kommt. Die Zellenradschleuse kann natürlich auch bei anderen als bei CIP- und COP-Anwendungen zur Förderung von Schüttgut herangezogen werden.

Eine Gestaltung der Dichtungs-Baugruppe nach Anspruch 2 führt zu einem besonders geringen Montage- und Reinigungsaufwand für die Dichtungs-Baugruppe.

Bei einer Dichtungs-Baugruppe nach Anspruch 3 ist eine funktionsangepasste Auslegung verschiedener Funktionsabschnitte der Dichtungs-Baugruppe, also insbesondere eines Innen-, eines Dicht- und eines Befestigungsabschnitts aus für diese Funktionen besonders gut geeigneten Materialien möglich.

Dies gilt entsprechend für eine Ausführung der Dichtungs-Baugruppe nach den Ansprüchen 4 und 5.

Mindestens zwei Wellendichtringe nach Anspruch 6 gewährleisten eine besonders sichere Abdichtung der Zellenrad-Antriebswelle gegen das Gehäuse der Zellenradschleuse. Die Dichtungslippen können beide schräg zum Innenraum der Zellenradschleuse hin verlaufend ausgebildet sein. Alternativ ist es möglich, eine innere Dichtungslippe zum Innenraum hin verlaufend und eine äußere Dichtungslippe schräg vom Innenraum weg verlaufend auszuführen. Bei einer alternativen Ausführung der Dichtungs-Baugruppe ist auch nur ein Wellendichtring möglich.

Eine radiale Erweiterung der Dichtungsaufnahme nach Anspruch 7 erlaubt eine einfache axiale Sicherung der montierten Dichtungs-Baugruppe durch Einrasten.

Ein Gegenabschnitt mit Schlitzen nach Anspruch 8 führt zu einer gewünschten Rast-Elastizität des Gegenabschnittes auch bei einem Befestigungsabschnitt aus relativ steifem Material.

Ein Verdrehsicherungsabschnitt nach Anspruch 9 verhindert sicher, dass sich die Dichtungs-Baugruppe unerwünscht mit dem Zellenrad mitdreht.

Eine konische Erweiterung eines Innenabschnitts der Dichtungs-Baugruppe nach Anspruch 10 ermöglicht eine Pressdichtung des Innenabschnitts im Seitendeckel, ohne dass zwischen dem Innenabschnitt und dem Seitendeckel ein Spalt verbleibt.

Ein zur inneren Seitendeckelwand fluchtender Innenabschnitt nach Anspruch 11 gewährleistet einen glatten Übergang zwischen dem Seitendeckel und dem Innenabschnitt der Dichtungs-Baugruppe. Produktreste können sich hier nicht unerwünscht ansammeln.

Bei einer sich zum Innenraum der Zellenradschleuse hin erweiternden Aufnahme nach Anspruch 12 ist eine einfache Demontage der Dichtungs-Baugruppe zum Innenraum hin gewährleistet.

Ausführungsbeispiele der Erfindung werden nachfolgend anhand der Zeichnung näher erläutert. In dieser zeigen:
- Fig. 1: eine Seitenansicht einer Zellenradschleuse, hälftig geschnitten in einem axialen Längsschnitt;
- Fig. 2: vergrößert einen Ausschnitt aus der Fig. 1 im Bereich eines antriebswellenseitigen Gehäuse-Seitendeckels;
- Fig. 3: im Vergleich zur Fig. 2 nochmals vergrößert eine Dichtungs-Baugruppe, die eine äußere Mantelwand einer Zellenrad-Antriebswelle gegen eine diese umgebende Innenwand des Gehäuse-Seitendeckels abdichtet;
- Fig. 4: verkleinert eine perspektivische Ansicht der Dichtungs-Baugruppe nach Fig. 3; und
- Fig. 5 bis 15: perspektivisch und teilweise hälftig geschnitten Varianten von Dichtungs-Baugruppen.

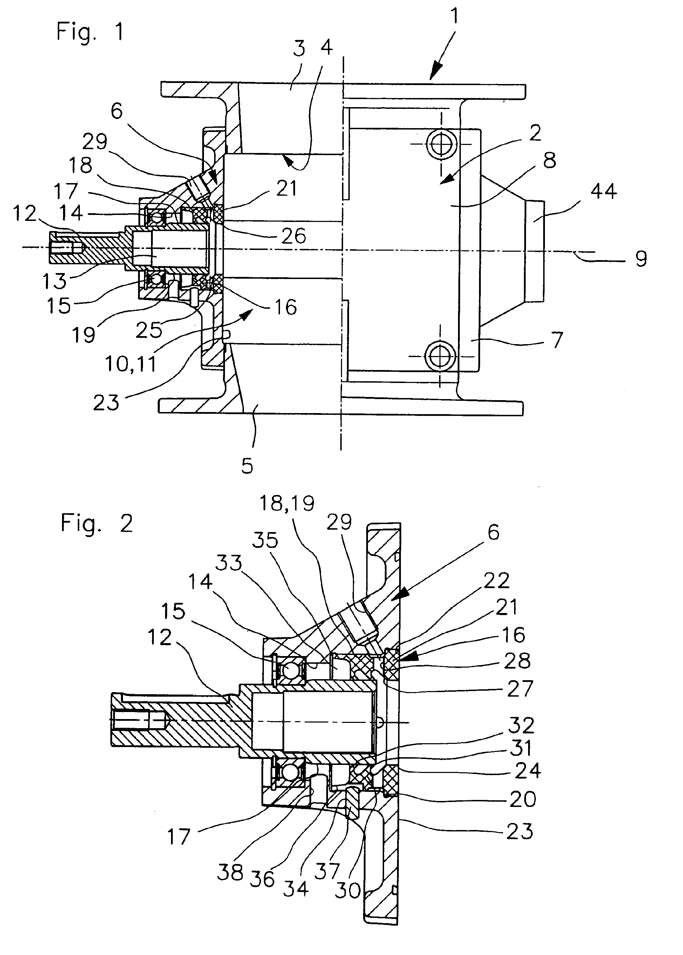

Eine Zellenradschleuse 1 hat ein Gehäuse 2, das in der Fig. 1 nach oben begrenzt ist durch einen Zulaufschacht 3, der in eine Zellenradgehäusebohrung 4 einmündet. Nach unten in der Fig. 1 ist das Gehäuse 2 begrenzt durch einen Auslaufschacht 5, der aus der Zellenradgehäusebohrung 4 ausmündet. In der Fig. 1 zu beiden Seiten hin ist das Gehäuse 2 begrenzt durch Gehäuse-Seitendeckel 6, 7. In der Fig. 1 nach vorne und nach hinten ist das Gehäuse 2 begrenzt durch Gehäusewände, von denen in der Fig. 1 nur eine vordere Zellenradgehäusewand 8 sichtbar ist.

Die Zellenradgehäusebohrung 4 hat die Form eines in der Fig. 1 quer liegenden Hohlzylinders mit Zylinderachse 9. Ein Zellenrad 10 ist in der Zellenradgehäusebohrung 4 um eine mit der Zylinderachse 9 zusammenfallende Längsachse drehantreibbar angeordnet. Das Zellenrad 10 ist seitenscheibenfrei. Die durch Zellenradstege 11 voneinander in Umfangsrichtung um die Längsachse 9 voneinander getrennten, sektorförmigen Zellenradkammern werden also seitlich von den Gehäuse-Seitendeckeln 6, 7 begrenzt. Die Gehäuse-Seitendeckel 6, 7 stellen daher stirnseitige Begrenzungen der Zellenradgehäusebohrung 4 dar.

Die Zellenradgehäusebohrung 4 bildet einen Innenraum der Zellenradschleuse 1, durch den Fördergut vom Zulaufschacht 3 hin zum Auslaufschacht 5 mittels Drehung des Zellenrads 10 gefördert wird.

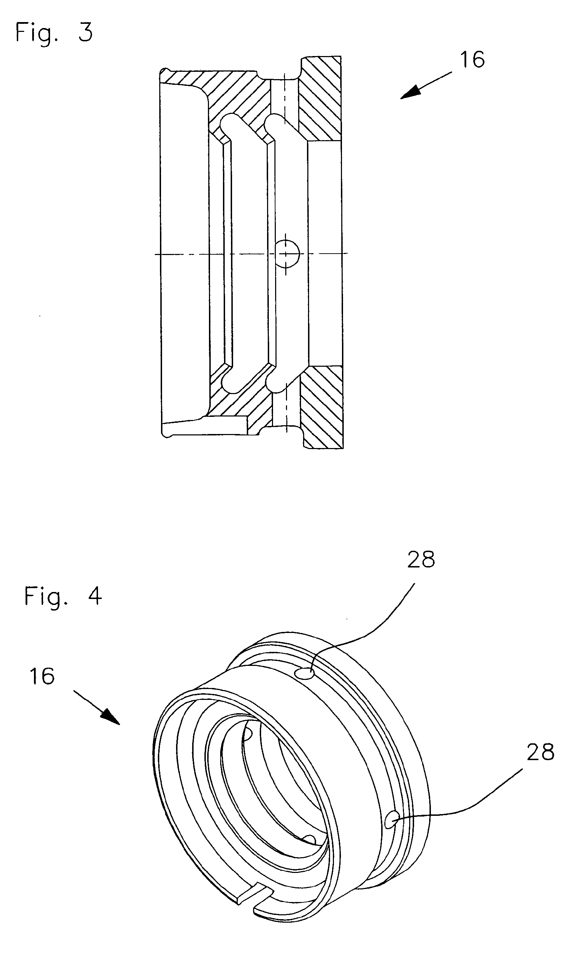

Das Zellenrad 10 ist drehfest mit einer Zellenrad-Antriebswelle 12 verbunden. Ein Wellenstummel 13, der die Zellenrad-Antriebswelle 12 axial fortsetzt und damit Teil der Antriebswelle ist, des Zellenrads 10 ist in einer Wellenaufnahme 14 über ein Axial/Radiallager 15 gelagert. Zwischen dem Axial/Radiallager 15 und der Zellenradgehäusebohrung 4 ist die Zellenrad-Antriebswelle 12, 13 gegen den Gehäuse-Seitendeckel 6 über eine Dichtungs-Baugruppe 16 abgedichtet, die im Detail in den Fig. 2 bis 4 dargestellt ist. Die Dichtungs-Baugruppe 16, die auch als Dichtkassette bezeichnet wird, ist angeordnet zwischen einer äußeren Mantelwand 17 der Antriebswelle 12, 13 und einer diese umgebenden Innenwand 18 des Seitendeckels 6 und dichtet diese beiden Wände 17, 18 gegeneinander ab. Die Wände 17, 18 bilden eine Dichtungsaufnahme 19 zwischen sich aus, die sich zum Innenraum der Zellenradschleuse 1 hin, also in der Fig. 2 nach rechts, über eine Stufe 20 erweitert.

Die Ausführungsform der Dichtungs-Baugruppe 16 nach den Fig. 1 bis 5 ist einteilig aus einheitlichem Material, nämlich aus Kunststoff, gefertigt. Die Dichtungs-Baugruppe 16 hat einen den Innenraum der Zellenradschleuse 1 benachbarten Innenabschnitt 21, der auch als Spülabschnitt bezeichnet ist. Zum Innenraum hin erweitert sich eine äußere Mantelwand 22 des Innenabschnitts 21 konisch, so dass der Innenabschnitt 21 der Dichtungs-Baugruppe 16 im Bereich einer inneren Seitendeckelwand 23 am Seitendeckel 6 spaltfrei anliegt. Eine Seitenwand 24 des Innenabschnitts 21 fluchtet mit der inneren Seitendeckelwand 23, setzt letztere also zur Zylinderachse 9 hin stufenfrei und praktisch übergangslos fort.

Zwischen einer Wellenstummel-Umfangswand 25 und dem Innenabschnitt 21 verbleibt ein ringförmiger Spülspalt 26 mit einer Weite von wenigen Zehntel Millimetern. Der Spülspalt 26 stellt eine Verbindung her zwischen dem Innenraum der Zellenradschleuse 1 und einem in der Dichtungs-Baugruppe 16 ausgeformten Spül-Ringkanal 27, der wiederum über in Umfangsrichtung um die Dichtungs-Baugruppe 16 verteilte Stichleitungen 28 über einen weiteren Ringkanal mit einem Spülgasanschluss 29 in Fluidverbindung steht.

Vom Innenraum der Zellenradschleuse 1 her gesehen hinter dem Innenabschnitt 21 und dem Spül-Ringkanal 27 hat die Dichtungs-Baugruppe 16 einen Dichtabschnitt 30. Letzterer hat zwei axial hintereinander angeordnete Wellendichtringe 31, 32 in Form von Dichtungslippen. Diese sind bei der Ausführung nach den Fig. 1 bis 4 schräg zum Innenraum der Zellenradschleuse 1 hin verlaufend angeordnet, so dass der Dichtabschnitt 30 eine sichere Dichtung zwischen der Zellenrad-Antriebswelle 12 und dem Gehäuse-Seitendeckel 6 insbesondere auch gegen den Durchtritt von Spülfluid gewährleistet.
Vom Innenraum der Zellenradschleuse 1 her gesehen hinter dem Dichtabschnitt 30 liegt ein Befestigungsabschnitt 33 der Dichtungs-Baugruppe 16. Der Befestigungsabschnitt 33 hat eine Durchmessererweiterung in Form eines elastischen Ringbundes 34, der in eine komplementär hierzu ausgeführte radiale Erweiterung 35 in der Dichtungsaufnahme 19 eingerastet ist. Der Ringbund 34 stellt also einen Gegenabschnitt zur Erweiterung 35 dar. Hierdurch ist eine axiale Sicherung der Dichtungs-Baugruppe 16 im Seitendeckel 6 gewährleistet.

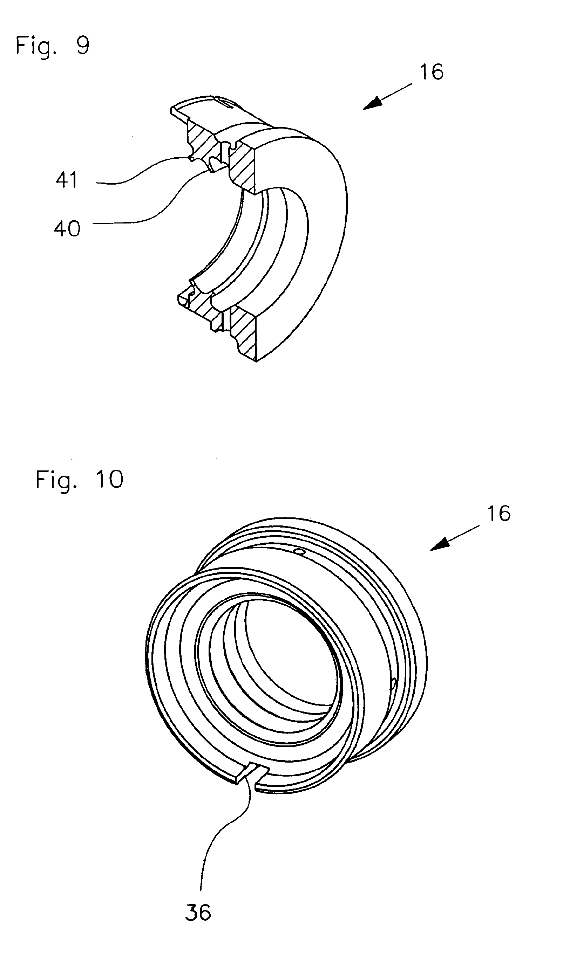

Am Übergang zwischen dem Dichtabschnitt 30 und dem Befestigungsabschnitt 33 hat die Dichtungs-Baugruppe 16 einen Verdrehsicherungsabschnitt 36 in Form einer Ausnehmung, die in der perspektivischen Ansicht der Dichtungs-Baugruppe 16 nach Fig. 10 gut sichtbar ist. Im Bereich des Verdrehsicherungsabschnitts 36 weicht die Dichtungs-Baugruppe 16 von einer Rotationssymmetrie um die Zylinderachse ab. In den Verdrehsicherungsabschnitt 36 greift ein am Gehäuse-Seitendeckel 6 des Zellenradgehäuses 2 festgelegter Gegenabschnitt in Form eines Verdrehsicherungsbolzens 37 ein, der zur Verdrehsicherung der Dichtungs-Baugruppe 16 relativ zum Seitendeckel 6 mit dem Verdrehsicherungsabschnitt 36 komplementär zusammenwirkt.

Zwischen der Dichtungs-Baugruppe 16 und dem Axial/Radiallager 15 ist eine Ausfallöffnung 38 ausgeführt, die die Wellenaufnahme 14 mit dem Außenraum um den Seitendeckel 6 verbindet.

Bei der Montage der Dichtungs-Baugruppe 16 wird diese vom Innenraum der Zellenradschleuse 1 her in die Dichtungsaufnahme 19 bei bereits montierter Zellenrad-Antriebswelle 12 eingeschoben, bis der Ringbund 34 in die Erweiterung 35 einrastet. Der Verdrehsicherungsabschnitt 36 ist dabei so ausgerichtet, dass der schon vormontierte oder anschließend eingesetzte Verdrehsicherungsbolzen 37 in den Verdrehsicherungsabschnitt 36 eingreift. Durch die Verdrehsicherung ist gewährleistet, dass sich die Dichtungs-Baugruppe 16 nicht unerwünscht mit dem Zellenrad 10 mitdreht.

Beim Spülen der Dichtungs-Baugruppe 16 tritt Spülfluid über den Spülgasanschluss 29 und die Stichleitungen 28 in den Spül-Ringkanal 27 ein und zum Innenraum hin über den Spülspalt 26 aus dem Spül-Ringkanal 27 aus. Da die Wellendichtungen 31, 32 dicht an der Zellenrad-Antriebswelle 12 anliegen, ist verhindert, dass Spülfluid unerwünscht zwischen den Wellendichtungen 31, 32 und der Zellenrad-Antriebswelle 12 hindurchtritt.

Zur Reinigung der Zellenradschleuse 1 kann bei abmontiertem Zellenrad 10 die Dichtungs-Baugruppe 16 aus der Dichtungsaufnahme 19 zum Innenraum der Zellenradschleuse 1 hin herausgezogen werden, wobei die elastische Federkraft des Ringbundes 34 in der Erweiterung 35 überwunden wird. Der Verdrehsicherungsbolzen 37 kann bei der Demontage an Ort und Stelle verbleiben.

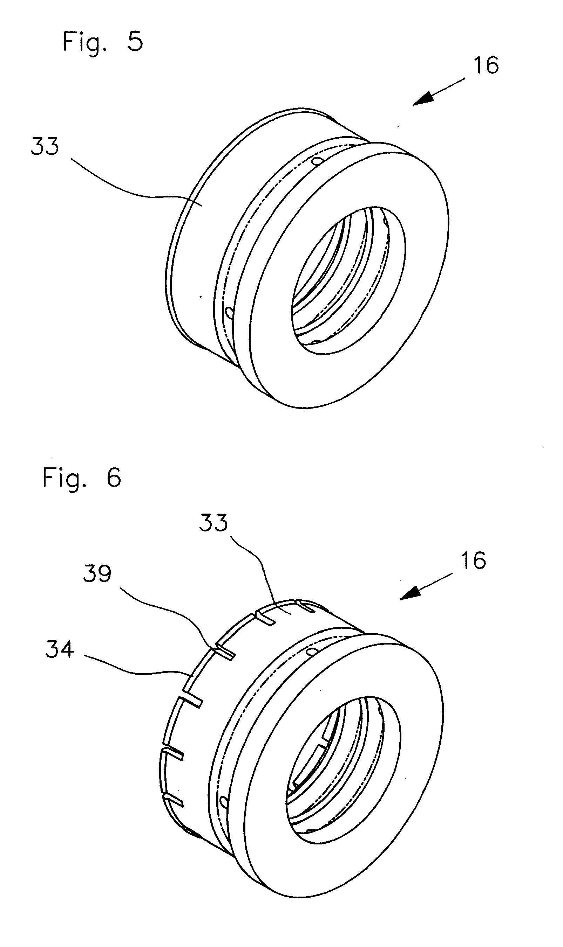

Varianten der Dichtungs-Baugruppe 16 werden nachfolgend anhand der Fig. 5 bis 15 beschrieben. Komponenten der Dichtungs-Baugruppe 16, die denjenigen entsprechen, die vorstehend schon unter Bezugnahme auf die Fig. 1 bis 4 erläutert wurden, tragen die gleichen Bezugsziffern und werden nicht nochmals im Einzelnen diskutiert.

Im Unterschied zum nichtgeschlitzten Befestigungsabschnitt 33 der Ausführung nach Fig. 5 hat ein Befestigungsabschnitt 33 der Ausführung nach Fig. 6 eine Mehrzahl von längs verlaufenden Schlitzen 39. Durch die Schlitze 39 wird auch bei weniger elastischem Material des Befestigungsabschnitts 33 eine ausreichende Elastizität und Flexibilität des Ringbunds 34 erreicht.

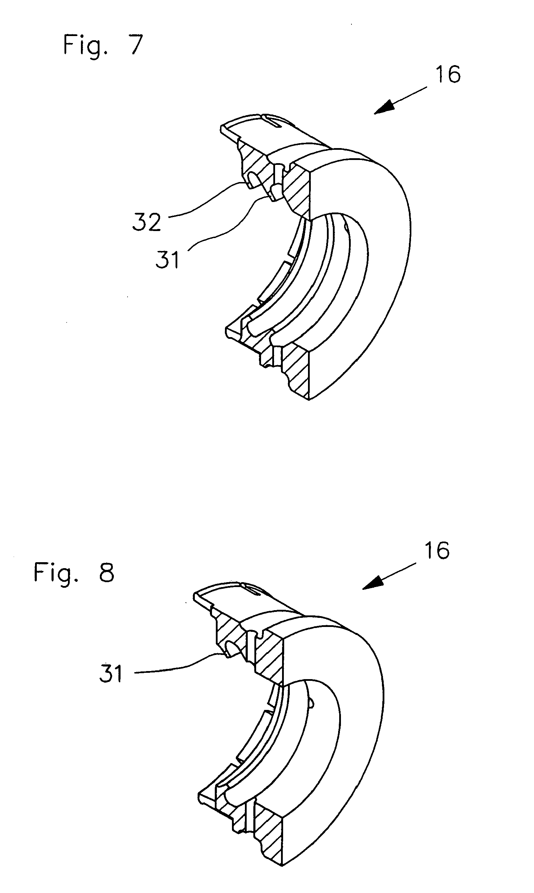

Im Unterschied zum Dichtabschnitt 30 der Ausführung nach Fig. 7 mit zwei Wellendichtungen 31, 32, die schräg zum Innenraum der Zellenradschleuse 1 hin verlaufen, weist die Ausführung der Dichtungs-Baugruppe 16 nach Fig. 8 nur eine Wellendichtung, nämlich die Wellendichtung 31 auf. Die Ausführung nach Fig. 9 weist eine dem Innenraum zugewandte und schräg zu diesem hin verlaufende erste Wellendichtung 40 und dahinter eine schräg vom Innenraum abgewandte zweite Wellendichtung 41 auf. Auch die Wellendichtungen 40, 41 sind als Dichtlippen ausgeführt.

Wie vorstehend bereits erläutert, dient die Fig. 10 zur Veranschaulichung des Verdrehsicherungsabschnitts 36.

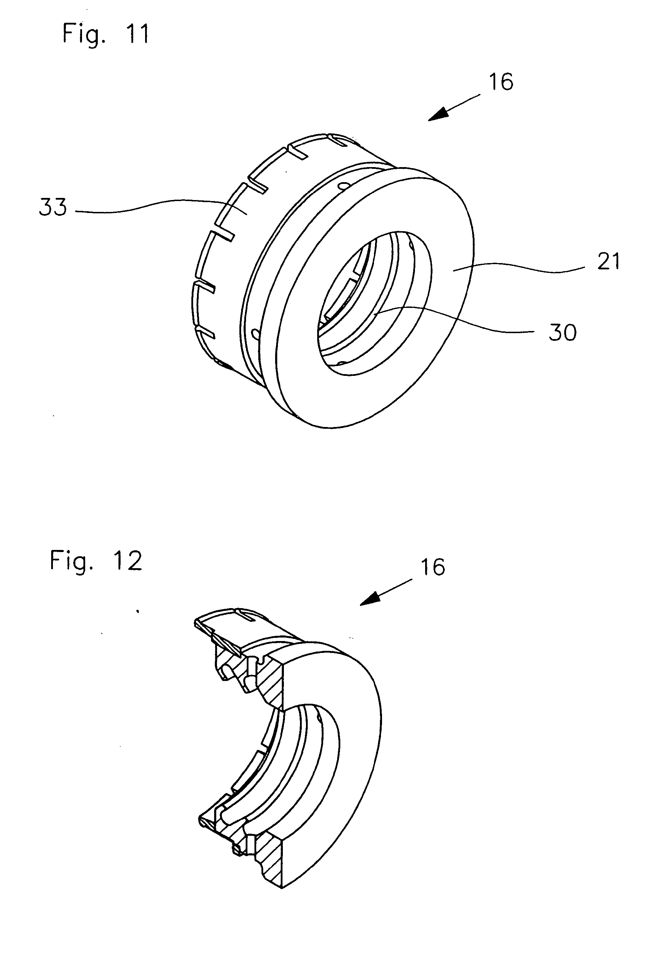

Fig. 11 bis 14 zeigen Ausführungsformen von Dichtungs-Baugruppen 16 aus Verbundmaterial bzw. mehrteilige Ausführungen.

Bei der Verbundausführung nach den Fig. 11 und 12 sind der Innenabschnitt 21 und der Dichtabschnitt 30 aus einem ersten Kunststoffmaterial und der Befestigungsabschnitt 33 ist aus einem zweiten Kunststoffmaterial gefertigt.

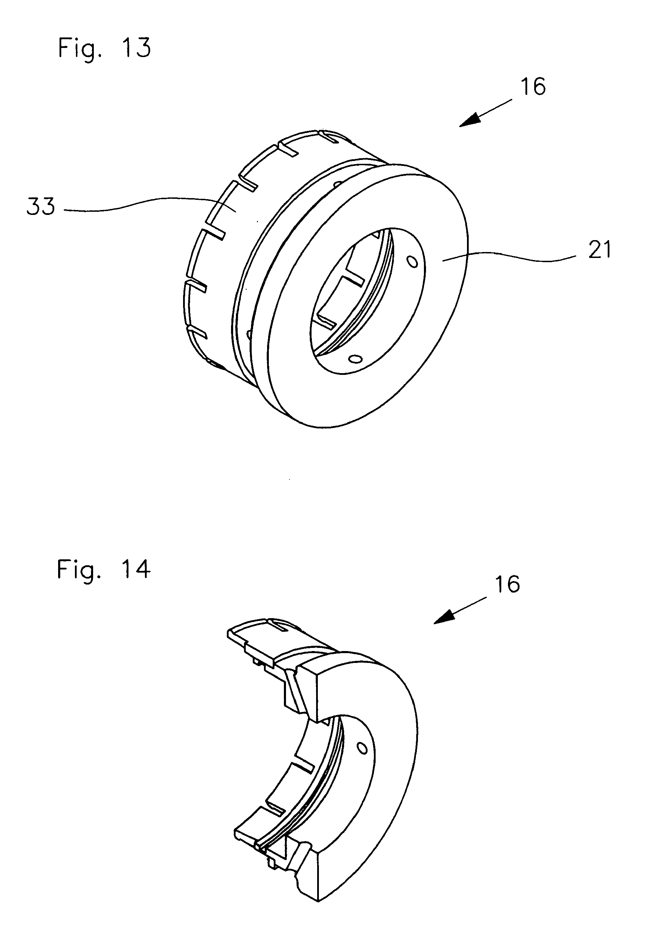

Bei der mehrteiligen Ausführung der Dichtungs-Baugruppe 16 nach den Fig. 13 bis 15 ist der Innenabschnitt 21 aus Metall, insbesondere aus Stahl, und der Befestigungsabschnitt 33 aus Kunststoff ausgeführt.

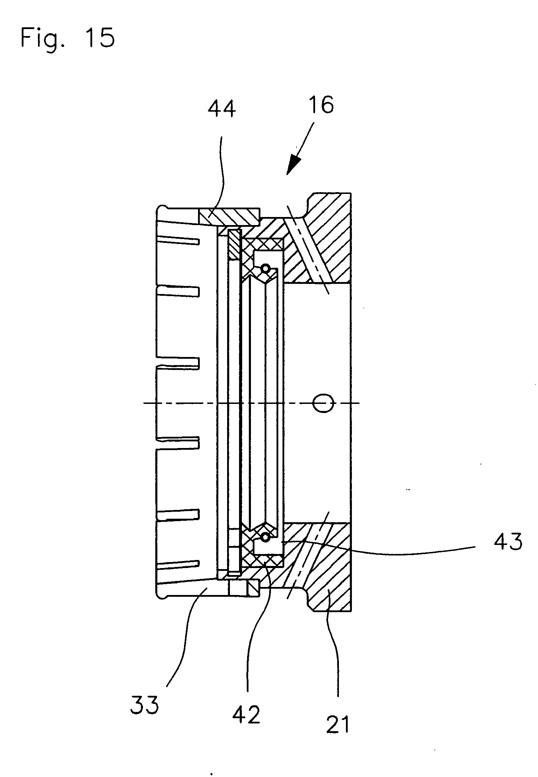

In den Innenabschnitt 21 wird bei der Ausführung nach den Fig. 13 bis 15 ein Wellendichtring 42 in eine Dichtungsausnehmung 43 eingesetzt und axial über einen Sicherungsring 44 gesichert. Mit der eingesetzten und gesicherten Wellendichtung 42 stellt auch die Ausführung nach den Fig. 13 und 15 eine vormontierte Dichtungs-Baugruppe dar, die als Einheit montiert und demontiert werden kann.

Nach der Demontage der Dichtungs-Baugruppe 16 kann diese gereinigt werden. Im Falle der mehrteiligen Ausführung der Fig. 13 bis 15 kann die Dichtungs-Baugruppe 16 vor der Reinigung zerlegt werden.

Bei demontierter Dichtungs-Baugruppe 16 ist eine einfache Reinigung der Dichtungsaufnahme 19 sowie der Wellenaufnahme 14 bis hin zur Ausfallöffnung 38 möglich.

Eine entsprechende Dichtungs-Baugruppe 16 dichtet den gegenüberliegenden Wellenstummel des Zellenrads 10, der von einem Gehäusedeckel 44 abgedeckt wird, gegen den Gehäuse-Seitendeckel 7 ab.

Bei einer nicht dargestellten Variante der Zellenradschleuse ist die Zellenrad-Antriebswelle 12 kein zum Wellenstummel 13 separates Bauteil. Bei dieser Variante sind die Zellenrad-Antriebswelle und der Wellenstummel Bestandteile ein- und desselben Bauteils. In diesem Fall wird der Seitendeckel 6 in der Fig. 1 nach links von der Zellenrad-Antriebswelle 12 abgezogen, um die Dichtungs-Baugruppe 16 zugänglich zu machen.

Eine entsprechende einteilige Wellengestaltung kann auch im Bereich des vom Gehäusedeckel 44 abgedeckten gegenüberliegenden Wellenstummels des Zellenrads 10 vorgesehen sein.

Für die Materialien, aus denen die einzelnen Abschnitte der Dichtungs-Baugruppe bzw. die gesamte Dichtungs-Baugruppe aufgebaut ist, kommen lebensmittelgerechte Materialien, insbesondere Materialien mit Lebensmittelzulassung, verschleißresistente Materialien und Dichtungsmaterialien zum Einsatz.

## Patentansprüche

1. Zellenradschleuse (1)
- mit einem Gehäuse (2),
- mit einem in einer zylindrischen Zellenradgehäusebohrung (4) um eine mit einer Zylinderachse (9) der Zellenradgehäusebohrung (4) zusammenfallende Längsachse drehantreibbar angeordneten Zellenrad (10),
- mit einer koaxial zur Zylinderachse (9) verlaufenden Zellenrad-Antriebswelle (12, 13), die drehfest mit dem Zellenrad (10) verbunden ist,
- mit einem in das Gehäuse (2) einmündenden Zulaufschacht (3),
- mit einem aus dem Gehäuse (2) ausmündenden Auslaufschacht (5),
- wobei die Zellenradgehäusebohrung (4) zur Bildung eines Innenraums in der Zellenradschleuse (1) stirnseitig beiderseits begrenzt durch jeweils einen Gehäuse-Seitendeckel (6, 7),
**dadurch gekennzeichnet, dass**
- eine äußere Mantelwand (17) der Zellenrad-Antriebswelle (12, 13) gegen eine diese umgebende Innenwand (18) des Gehäuse-Seitendeckels (6, 7) abgedichtet ist durch eine vormontierte Dichtungs-Baugruppe (16),
- die angeordnet ist in einer zwischen der äußeren Mantelwand (17) und der Innenwand (18) ausgebildeten Dichtungsaufnahme (19), die derart geformt ist, dass die Dichtungsbaugruppe (16) zum Innenraum der Zellenradschleuse (1) hin demontierbar ist.

2. Zellenradschleuse nach Anspruch 1, **dadurch gekennzeichnet, dass** die Dichtungs-Baugruppe (16) einteilig aus einheitlichem Material gefertigt ist.

3. Zellenradschleuse nach Anspruch 1, **dadurch gekennzeichnet, dass** die Dichtungs-Baugruppe (16) aus Verbundmaterial gefertigt ist.

4. Zellenradschleuse nach Anspruch 1, **dadurch gekennzeichnet, dass** die Dichtungs-Baugruppe (16) mehrteilig aus formschlüssig miteinander montierten Komponenten (21, 33, 42, 44) gefertigt ist.

5. Zellenradschleuse nach Anspruch 3 oder 4, **dadurch gekennzeichnet, dass** ein Befestigungsabschnitt (33) der Dichtungs-Baugruppe (16) aus einem anderen Material ausgeführt ist als ein Dichtabschnitt (30).

6. Zellenradschleuse nach einem der Ansprüche 1 bis 5, **dadurch gekennzeichnet, dass** die Dichtungs-Baugruppe (16) mindestens zwei axial hintereinander angeordnete Wellendichtringe (31, 32) aufweist, die insbesondere als Dichtungslippen ausgeführt sind.

7. Zellenradschleuse nach einem der Ansprüche 1 bis 6, **dadurch gekennzeichnet, dass** die Dichtungsaufnahme (19) eine radiale Erweiterung (35) aufweist, in die ein komplementär hierzu ausgeführter elastischer Gegenabschnitt (34) der Dichtungs-Baugruppe (16) eingerastet ist.

8. Zellenradschleuse nach Anspruch 7, **dadurch gekennzeichnet, dass** der Gegenabschnitt (34) um seinen Umfang verteilt eine Mehrzahl von längs verlaufenden Schlitzen (39) aufweist.

9. Zellenradschleuse nach einem der Ansprüche 1 bis 8, **dadurch gekennzeichnet, dass** die Dichtungs-Baugruppe (16) einen Verdrehsicherungsabschnitt (36) aufweist, an dem sie von einer Rotationssymmetrie um die Zylinderachse (9) abweicht, wobei mit dem Verdrehsicherungsabschnitt (36) ein am Zellenradgehäuse (2) festgelegter Gegenabschnitt (37) komplementär zusammenwirkt.

10. Zellenradschleuse nach einem der Ansprüche 1 bis 9, **dadurch gekennzeichnet, dass** ein dem Innenraum benachbarter Innenabschnitt (21) der Dichtungs-Baugruppe (16) sich konisch zum Innenraum hin erweiternd (22) ausgeführt ist.

11. Zellenradschleuse nach einem der Ansprüche 1 bis 10, **dadurch gekennzeichnet, dass** ein dem Innenraum benachbarter Innenabschnitt (21) der Dichtungs-Baugruppe (16) mit einer inneren Seitendeckelwand (23) fluchtet.

12. Zellenradschleuse nach einem der Ansprüche 1 bis 11, **dadurch gekennzeichnet, dass** sich die Dichtungsaufnahme (19) zum Innenraum hin erweitert.
